# EUROPÄISCHE PATENTSCHRIFT

(11) **EP 1 237 704 B1**
(45) Veröffentlichungstag und Bekanntmachung des Hinweises auf die Patenterteilung: **17.05.2006**
(21) Anmeldenummer: 00985072.8
(22) Anmeldetag: 21.11.2000
(51) Int. Cl.: B29C 45/68

(54) **VORRICHTUNG UND VERFAHREN ZUR DURCHFÜHRUNG EINER ZWEISTUFIGEN LINEAREN BEWEGUNG**
DEVICE AND METHOD FOR CARRYING OUT A TWO-STAGE LINEAR MOVEMENT
DISPOSITIF ET PROCEDE PERMETTANT DE REALISER UN MOUVEMENT LINEAIRE EN DEUX TEMPS

(30) Priorität: 22.11.1999 DE 19956190
(43) Veröffentlichungstag der Anmeldung: 11.09.2002
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: PCT/EP2000/011581
(87) Internationale Veröffentlichungsnummer: WO 2001/038070

(56) Entgegenhaltungen:
- DE-A- 19 542 453
- PATENT ABSTRACTS OF JAPAN vol. 1997, no. 06, 30. Juni 1997 (1997-06-30) -& JP 09 029802 A (TOSHIBA MACH CO LTD), 4. Februar 1997 (1997-02-04)
- PATENT ABSTRACTS OF JAPAN vol. 017, no. 177 (M-1393), 6. April 1993 (1993-04-06) -& JP 04 332616 A (SODICK CO LTD), 19. November 1992 (1992-11-19)

## Beschreibung

Die Erfindung betrifft eine Vorrichtung zur Durchführung einer im wesentlichen zweistufigen linearen Bewegung, die vorzugsweise aber nicht nur an einer Kunststoff-Spritzgießmaschine einsetzbar ist, nach dem Gegenstand des Anspruches 1 sowie ein Verfahren zur Durchführung dieser Bewegung nach dem Gegenstand des Anspruchs 13.

Eine derartige Vorrichtung ist aus der DE 195 42 453 C2 bekannt. In einem Rohr mit Innengewinde liegt eine Welle mit einem Kopf mit Außengewinde. Vorzugsweise sind zwischen Welle und Rohr Wälz- oder Rollkörper in Form von Planeten angeordnet, die gegenüber dem Kopf axial unverschieblich gelagert sind und mit den beiden Gewinden von Kopf und Rohr in Wirkverbindung stehen. Um die Welle herum und gegenüber dieser unbeweglich ist ein weiteres Rohr angeordnet, das sich bei Bewegung der elektromechanischen Einheit in das mit dem Innengewinde versehene Rohr hineinbewegt und aus diesem herausbewegt. Die Welle ist über Tellerfedern so gelagert, dass bei Betätigung der Welle über eine erste Antriebseinheit sich diese so lange bewegen kann, bis eine höhere Kraft z.B. durch eine zweite Antriebseinheit aufgebracht wird. Die Welle kann damit zwar bedarfsweise vom Kraftfluss getrennt werden und die Kräfte werden über die beiden ineinandergreifenden Rohre übertragen, ein allmählicher Übergang von der einen Antriebseinheit auf die andere ist nicht möglich

Die japanische Offenlegungsschrift JP-A 9-29802 zeigt einen zweistufigen Schließmechanismus, bei dem die Fahrbewegung zunächst über eine Gewindewelle kleinen Durchmessers erfolgt, während das Aufbringen der Schließkraft dann über eine Gewindewelle großen Durchmessers erfolgt. Die kleine Welle ist dazu in der großen Welle koaxial über ein Gewinde in Eingriff. Während der Fahrbewegung dreht sich eine mit dem Außengewinde der Gewindewelle größeren Durchmessers in Wirkverbindung stehende Mutter passiv mit. Kommt es zum Aufbringen der Schließkraft, wird eine Hülse hydraulisch beaufschlagt, wodurch zunächst ein Spalt zwischen Mutter und Hülse geschlossen wird. Bei weiterer Bewegung wird die Mutter durch die Hülse in eine Stellung gedrückt, in der die Schließkraft aufgebracht werden kann und die Welle blockiert ist. Durch das Gewinde ändert sich jedoch der Anlagepunkt positionsabhängig, so dass sich ein von Spritzzyklus zu Spritzzyklus veränderliches Ergebnissen einstellt.

Die japanische Offenlegungsschrift JP-A 4-332616 besitzt für die Fahrbewegung beim Zusammenfahren der Formen eine Kugelrollspindel, die im geöffneten Zustand der Form In die Kolbenstange eines Schließzylinders eintaucht Zur Betätigung der Kolbenstange des Schließzylinders ist an seinem Ende eine Kugelrollmutter angeordnet, die mit der Kugelrollspindel zusammenwirkt. Um die für die Schließkräfte nicht ausgelegte Kugelrollspindel zu entlasten und die Schließkraft aufzubringen, wird ein Verstellmechanismus vorgesehen, der spline-artig aufgebaut ist. Am formseitigen Ende des Schließzylinders und am von der Form entfernten Ende des Schließkolbens sind Ansätze voregesehen, die bei der Formschließbewegung aneinander vorbei gleiten, die aber andererseits auch die Übertragung der Formkräfte vom Schließzylinder auf den Schließkolben dienen. Daher wird über entsprechende Hilfsmittel eine Drehung der Teile dieses Verriegelungsmechanismus so bewirkt, dass anschließend unter Verringerung des Spaltes d die Schließkraft aufgebracht werden kann. Auch dies ist positionsabhängig und von Zyklus zu Zyklus verschieden.

Aus der DE 195 36 565 A1 ist ein elektromechanischer Antrieb bekannt, bei dem ebenfalls die Teile einer Planeten-Wälz-Gewindespindel über Sicherungsmittel wie z.B. Fedem gegen passives Rückdrehen gesichert sind. Es erfolgt eine zweistufige Bewegung, jedoch sind die Wälzkörper ständig im Kraftfluss. Die zweite Antriebseinheit wird erst betätigt, wenn die erste Antriebseinheit gesichert ist.

Das serielle Schließen der Form einer Spritzgießmaschine ist an sich zum Beispiel aus der EP 0 674 985 A1 bekannt, bei der Kräfte sowohl bei der Bewegung des beweglichen Formträgers bis zum Formschluss als auch bei Aufbringen der Zuhaltekraft stets über entsprechend zu dimensionierende Spindeln geleitet werden.

Aus der WO 92/11993 A1 ist es bekannt, eine hydraulische Kolben-Zylinder-Einheit mit einem Tauchkolben zu versehen, der zugleich mit einer Gewindespindel in Wirkverbindung steht. Mittel zum wirksamen Trennen der Gewindespindel vom Kraftfluss sind nicht vorgesehen.

Ausgehend von diesem Stand der Technik liegt der vorliegenden Erfindung die Aufgabe zugrunde, bei einem im wesentlichen zweistufigen linearen Bewegungsvorgang die Elemente zu schonen, die die Drehbewegung zur Erzielung der Geradeausbewegung übertragen.

Diese Aufgabe wird durch eine Vorrichtung mit den Merkmalen des Anspruches 1 sowie durch ein Verfahren mit den Merkmalen des Anspruchs 13 gelöst.

Das Rohr, das das Innengewinde aufweist, ist vorzugsweise so angeordnet, dass es sich infolge der Betätigung der ersten Antriebseinheit gegenüber der feststehenden Baueinheit nicht nur bewegt, sondem diese auch durchdringt. Gleichzeitig werden mit der zweiten Antriebseinheit gemeinsam bewegbare Trennmittel zum bedarfsweisen Trennen der Welle dieser ersten Antriebseinheit vom Kraftfluss angeordnet, so dass z.B. während der Betätigung der ersten Antriebseinheit eine freie Bewegung möglich ist. Sobald jedoch vorzugsweise eine vorbestimmte Randbedingung eintritt, kann die erste Antriebseinheit mit Ausnahme des die Kräfte übertragenden Rohrs freigesetzt werden. Damit sind die Teile der elektromechanischen Antriebseinheit, die über die Gewinde miteinander in Wirkverbindung stehen (Kopf der Welle, Wälzkörper), oder alternativ ein die erste Antriebseinheit bildender Linearmotor, nicht den von der zweiten Antriebseinheit aufzubringenden Kräften ausgesetzt und können dementsprechend auf die Übertragung geringerer Kräfte dimensioniert werden. Aufwendige selbsthemmende Gewinde an der elektromechanischen Antriebseinheit sind nicht erforderlich.

Weitere Vorteile ergeben sich aus den Unteransprüchen.

Im folgenden wird die Erfindung anhand von in den Figuren dargestellten Ausführungsbeispielen erläutert. Es zeigen:
- Fig. 1: Eine Ansicht einer auf einem Maschinenfuß befindlichen Schließeinheit von vom,
- Fig. 2: einen vergrößerten, teilweise geschnittenen Ausschnitt aus Fig. 1 im Bereich der feststehenden Baueinheit bei geöffnetem Werkzeug,
- Fig. 3,4: vergrößerte Ausschnitte von Fig. 2 im Bereich der feststehenden Baueinheit in zwei Ausführungsbeispielen hydraulischer Trennmittel,
- Fig. 5: eine Darstellung gemäß Fig. 2 mit einer magnetisch betätigbaren zweiten Antriebseinheit
- Fig. 6: eine Darstellung gemäß Fig. 5 mit einem Linearmotor als erste Antriebseinheit.

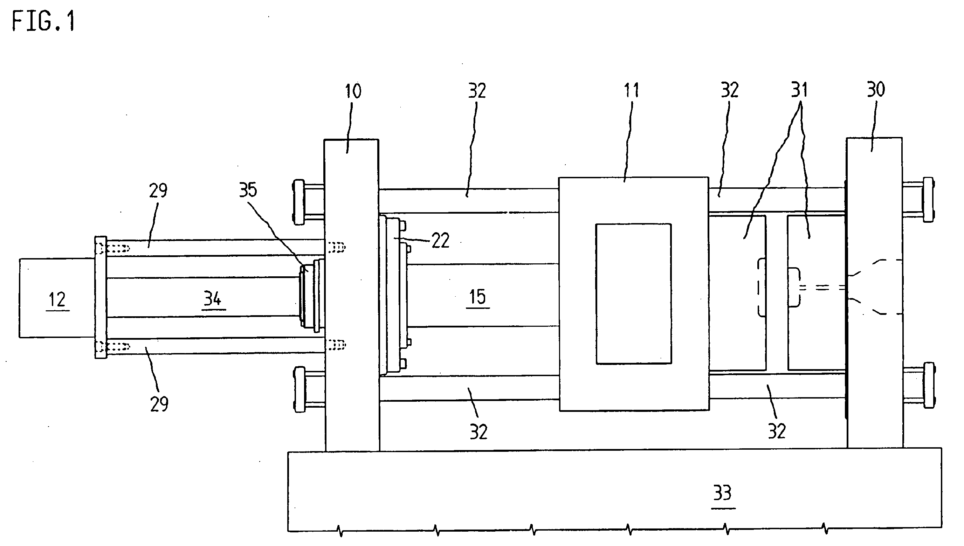

Die Figuren zeigen eine Vorrichtung zur Durchführung einer im Wesentlichen zweistufigen, linearen Bewegung anhand einer Kunststoff-Spritzgießmaschine, die zur Verarbeitung von Kunststoffen und anderer plastifizierbarer Massen wie pulverförmige Massen oder keramische Massen geeignet ist. Wenngleich die Vorrichtung im folgenden an dieser Spritzgießmaschine erläutert wird, kann sie doch allgemein für eine zweistufige lineare Bewegung von Maschinenteilen eingesetzt werden wie z.B. bei Werkzeugmaschinen und Robotern. Ist es bei manchen Maschinen wichtig, Bewegungen schnell durchzuführen, werden bei anderen Maschinen in erster Linie hohe Kräfte verlangt. Bei Kunststoff-Spritzgießmaschinen z.B. wechseln bei der Formschließeinheit gemäß Figur 1 die Anforderungen während des Bewegungsvorganges. So soll beim Schließen der Form 31 der bewegliche Formträger als bewegbare Baueinheit 11 zuerst möglichst schnell nach einem vorgegebenen Geschwindigkeitsprofil mit wenig Kraft bewegt werden, während bei der weiteren Schließbewegung eine hohe Zuhaltekraft notwendig ist.

Figur 1 zeigt den Aufbau einer Formschließeinheit, die auf einem Maschinenfuß 33 angeordnet ist. Die Formschließeinheit weist ein Abstützelement als feststehende Baueinheit 10 sowie einen stationären Formträger 30 auf. Stationärer Formträger 30 und feststehende Baueinheit 10 sind über Holme 32 miteinander verbunden, die einerseits der bewegbaren Baueinheit 11 (bewegbarer Formträger) als Führung dienen und gleichzeitig als Kraftübertragungselemente ausgebildet sind, um die beim Spritzgießen auftretenden Kräfte zu übertragen.

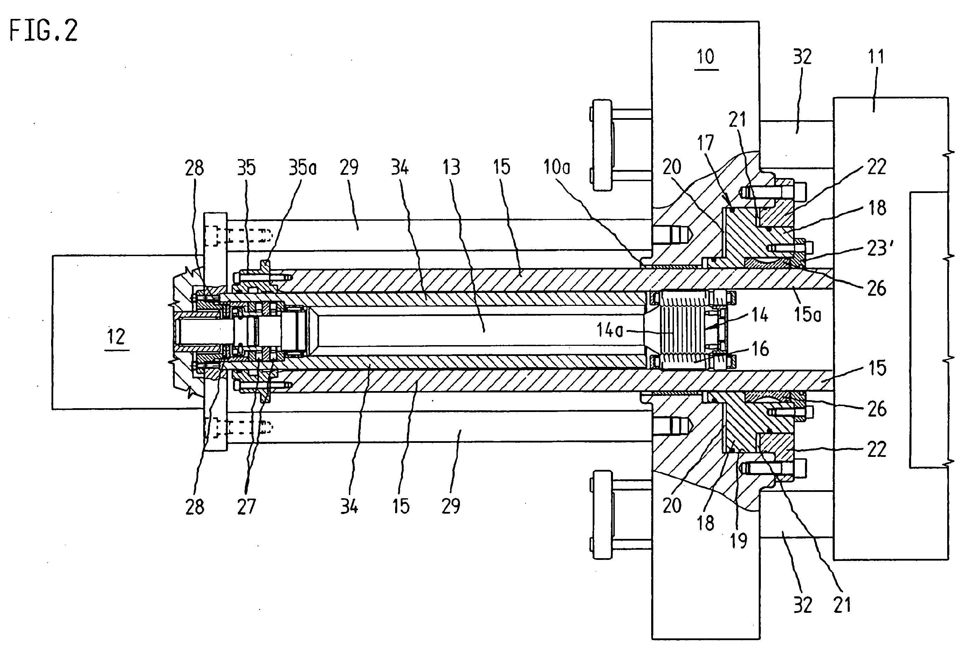

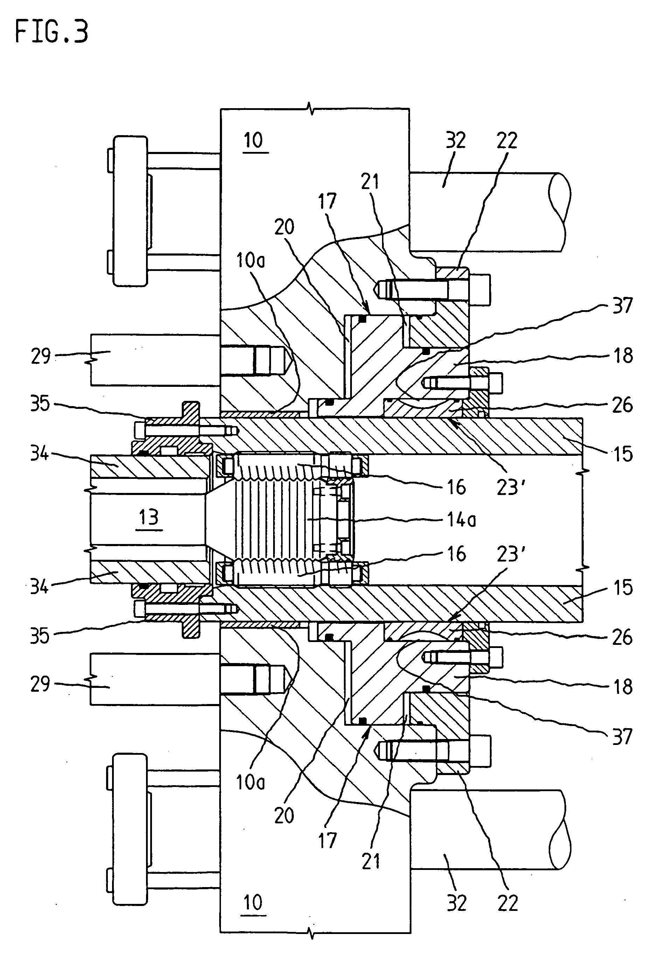

Die Schließbewegung bzw. das eigentliche Zufahren der Form erfolgt über eine erste elektromechanische Antriebseinheit 12, die an der feststehenden Baueinheit 10 befestigt ist. Die weitere Bewegung bzw. das Aufbringen der Zuhaltekraft erfolgt unter Einsatz einer zweiten hydraulischen Antriebseinheit 17 gemäß Fig. 2,3.

Die elektromechanische Antriebseinheit 12 weist gemäß den Figuren 2 und 3 eine drehbar angetriebene Welle 13 auf, die über eine Lagerung 27 an der ersten Antriebseinheit 12 gelagert ist. Die Welle 13 besitzt ihrerseits einen Bereich mit Außengewinde 14a im Ausführungsbeispiel den Kopf 14. Die Welle 13 selbst bewegt sich rotatorisch und ist bei Betätigung der ersten Antriebseinheit in Richtung der Welle im wesentlichen axial unveränderlich festgelegt. Die einzige Axialbewegung wird durch die später noch zu erläuternden Tellerfedern 28 zugelassen.

Mit dem Außengewinde 14a des Kopfes 14 steht ein Innengewinde 15a eines Rohres 15 in Wirkverbindung. Dieses Rohr 15 bewegt sich gemeinsam mit der bewegbaren Baueinheit 11 und ist koaxial zur Welle 13 angeordnet. Wenngleich dies grundsätzlich nicht erforderlich ist, werden zur Erleichterung der Rotationsbewegung zwischen der Welle 13 und dem Rohr 15 gegenüber der Welle 13 in axialer Richtung der Welle unbeweglich gehaltene Wälz- oder Rollkörper 16 in Form von Planeten angeordnet. Wird die Welle 13 rotiert, versetzt der Kopf 14 mit seinem Außengewinde 14a die Planeten in Rotation, so dass sich infolge des Eingriffs dieser Planeten in das Innengewinde 15a des Rohres 15 eine Axialbewegung des Rohres 15 ergibt. Gemäß den Figuren 2 und 3 ist das Rohr 15 so angeordnet, dass es die feststehende Baueinheit 10 durchdringt und sich infolge der Betätigung der ersten Antriebseinheit 12 relativ zu dieser feststehenden Baueinheit 10 bewegt. Vorzugsweise sind die Antriebseinheiten so angeordnet, dass sich die elektromechanische Antriebseinheit 12 in einem festen Abstand von der feststehenden Baueinheit 10 befindet, während die zweite Antriebseinheit 17 an der feststehenden Baueinheit angeordnet ist. Nach erfolgter kraftschlüssiger Festlegung des Rohres 15 kann dadurch auf einfache Weise der Ringkolben 18 der zweiten Antriebseinheit 17 unmittelbar auf das Rohr 15 zur Übertragung weiterer Kräfte einwirken.

Wird eine vorbestimmbare Bedingung erreicht, die zum Beispiel eine bestimmte trans-latorische Stellung des Rohrs 15 (z.B. eine Stellung kurz vor einem Formschluß bei einer Kunststoff-Spritzgießmaschine, um ein nachfolgendes Spritzprägen durchzuführen) oder das Erreichen einer vorbestimmbaren Axialkraft sein kann, so wird die Welle 13 durch Trennmittel 23,23',38 bedarfsweise zumindest vom weiteren Kraftfluss, ggf aber auch vom gesamten Kraftfluss ausgekoppelt. Die weitere Kraftaufbringung und/oder Bewegung erfolgt im Wesentlichen über eine zweite Antriebseinheit 17 nach Erreichen dieser vorbestimmbaren Bedingung. Diese vorbestimmbare Bedingung kann jedoch auch mehrere einzelne Bedingungen umfassen, wenn z.B. beide Antriebseinheiten über einen gewissen Zeitraum gemeinsam betätigt werden, was unten erläutert wird.

Die Trennmittel 23,23',38 zum bedarfsweisen Trennen der Welle sind an der feststehenden Baueinheit 10 und zwar gemeinsam bewegbar mit der zweiten Antriebseinheit 17 angeordnet. Sie legen bei Erreichen der vorbestimmbaren Bedingung das Rohr 15 mittelbar oder unmittelbar an der feststehenden Baueinheit 10 lösbar fest. Dabei koppeln die Trennmittel 23,23',38 das Rohr zunächst zur gemeinsamen Bewegung lösbar an die zweite Antriebseinheit 17. Dadurch wird zugleich die Trennung der Welle 13 zumindest aus dem weiteren Kraftfluss vorbereitet. Sobald nämlich die zweite Antriebseinheit 17 alleine betätigt wird, ist die Welle 13 entkoppelt. Eine vollständige Trennung ist dabei nicht erforderlich. Es genügt, wenn die weiteren Kräfte, die von der zweiten Antriebseinheit 17 aufgebracht werden, im Wesentlichen ohne weiteren Einfluss auf die bisher im Kraftfluss der ersten Antriebseinheit stehenden Elemente bleiben, diese jedoch auch weiterhin mit den bisherigen Kräften beaufschlagt werden. In diesem Fall erfolgt also eine Kraftüberlagerung ohne Einfluss auf diese Elemente. Gemäß Fig. 1 und 2 ist die erste Antriebseinheit 12 auf der von der beweglichen Baueinheit 11 abgewandten Seite der feststehenden Baueinheit 10 über Verbindungsmittel 29 abgestützt. Damit ändert sich die Lage des Kopfes 14 gegenüber der feststehenden Baueinheit grundsätzlich nicht mehr. Die Welle 13 ist von einem weiteren Rohr 34 umgeben, so dass sich bei der Axialbewegung des Rohres 15 auch infolge des Abschlusselements 35 äußerlich der Eindruck einer Kolben-Zylinder-Einheit ergibt, wobei der "Kolben" aus dem "Zylinder" heraustritt. Dadurch kann im Innenraum eine Dauerschmierung für die erste Antriebseinheit eingebracht werden.

Die Trennmittel 23,23',38 verklemmen das Rohr 15 kraftschlüssig und bei Verwendung von nur einem Rohr zentral, sobald bei einer Spritzgießmaschine z.B. der Formschluss erreicht ist und ein entsprechendes Signal gegeben wird, um die im Ausführungsbeispiel hydraulischen Trennmittel 23,23' durch Einbringen von Hydraulikmedium in die Zylinderräume 36,37 zu beaufschlagen. Dadurch sind die Trennmittel bedarfsweise jederzeit aktiv betätigbar, ohne dass erst eine bestimmte äußere Kraft wirksam werden müßte. Insofern kann z.B. beim Spritzprägen mit einer Kunststoff-Spritzgießmaschine unabhängig von den jeweiligen Kräften zu einem beliebigen Zeitpunkt von einer Antriebseinheit auf die andere gewechselt werden kann.

Die zweite Antriebseinheit 17 weist gemäß Fig. 2 als Kolben einen das Rohr 15 koaxial umschließenden Ringkolben 18 auf. Der Zylinder für diesen Kolben 18 wird durch eine Ausnehmung 19 der feststehenden Baueinheit 10 gebildet. Die Zylinderräume 20,21 werden in axialer Richtung des Rohres 15 durch den Grund 19a der Ausnehmung 19 sowie durch einen Ringflansch 22 begrenzt. Die Trennmittel 23,23',38 sind am bewegbaren Teil der zweiten Antriebseinheit, z.B. am Ringkolben 18 oder an einem Zwischenelement 39 selbst angeordnet, so dass nach Betätigung der Trennmittel 23,23',38 eine Beaufschlagung des Ringkolbens 18 oder eine Bewegung des Zwischenelements 39 dazu führt, dass mit Ringkolben oder Zwischenelement auch das Rohr 15 axial bewegt wird. Beim Schließvorgang wird Druck im Zylinderraum 20 aufgebracht, beim Öffnen kann Druck im Zylinderraum 21 aufgebracht werden, was grundsätzlich nicht zwingend erforderlich ist, da sich allein durch das Nachlassen des Drucks im Zylinderraum 20 eine Rückbewegung einstellt, so dass nach Abbau der Klemmung durch die Trennmittel 23,23',38 die weitere Bewegung durch die erste Antriebseinheit 12 bei einer Spritzgießmaschine als Öffnungsbewegung der Form 31 erfolgen kann.

Die Anordnung der Trennmittel an der zweiten Antriebseinheit ermöglicht damit auch, zur Erzielung einer überlagernden Bewegung die erste elektromechanische Antriebseinheit 12 und die hydraulische zweite Antriebseinheit 17 zumindest zeitweise gleichzeitig zu betätigen. So kann z.B. an einer Spritzgießmaschine beim Spritzprägen, also bei einem Einspritzen in den noch geöffneten Formspalt vor dem endgültigen Formschluß, die erste Antriebseinheit 12 noch betätigt werden, während die zweite Antriebseinheit auch schon in Betrieb ist. Vorteilhaft ist aber insbesondere, dass es damit möglich wird, die Last für einen Übergangszeitraum allmählich von der ersten Antriebseinheit auf die andere und umgekehrt zu übertragen. Insofern liegt nur noch eine im wesentlichen zweistufige Bewegung vor, da zwischen den beiden Stufen während einer Übergangszeit beide Antriebseinheiten betätigt werden. Durch die damit erfolgende Überlagerung der beiden Bewegungen kann ein nahtloser, ruckfreier Übergang leichter als bisher bewerkstelligt werden. An dieser Stelle werden damit aber aus der einen vorbestimmbaren Bedingung wenigstens zwei vorbestimmbare Bedingungen. Sobald nämlich eine erste Bedingung erreicht ist, werden die Trennmittel 23,23',38 betätigt. Jetzt wird die zweite Antriebseinheit 17 zugeschaltet, aber dennoch die erste Antriebseinheit 12 noch nicht abgeschaltet, bis eine weitere Bedingung erreicht ist. Im Wesentlichen wird jedoch der weitere Bewegungsablauf von der zweiten Antriebseinheit 17 übernommen, so dass vom Erreichen im Wesentlichen einer vorbestimmbaren Bedingung gesprochen werden kann.

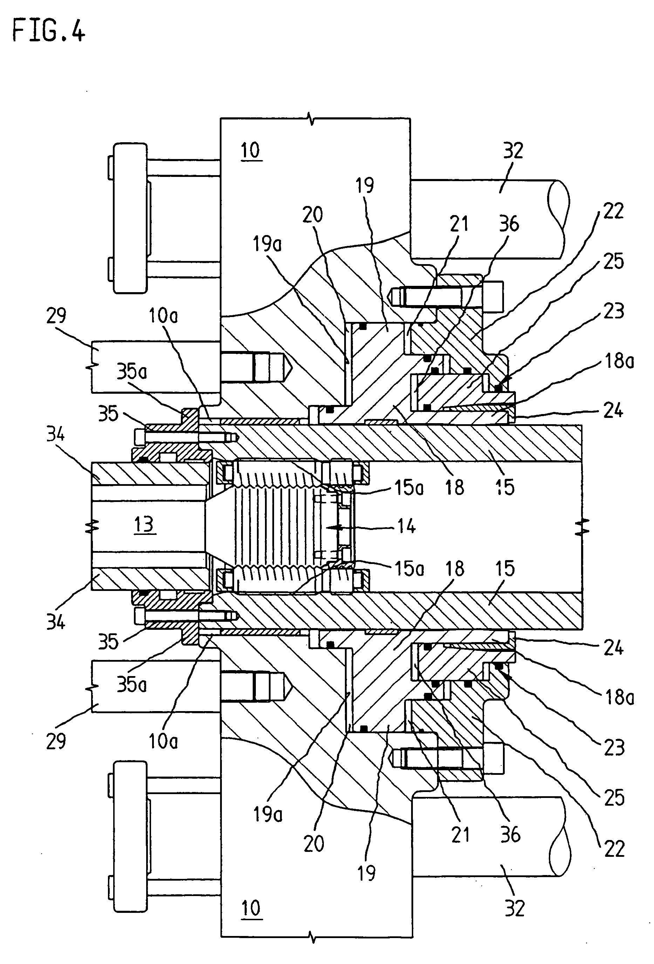

Figur 4 zeigt eine erste Ausführungsform der Trennmittel 23 in Form einer hydraulischen Spannzange. Bei dieser Ausführungsform besitzt der Ringkolben 18 einen sich entlang des Rohres 15 erstreckenden Flansch 18a. Dieser Flansch kann selbst bereits einen Konus aufweisen. Im Ausführungsbeispiel wird eine Schraubhülse 24 mit Konus an diesem Flansch 18a befestigt. Zur Bildung der Spannzange wirkt dieser Konus mit einem Gegenkonus eines weiteren Ringkolbens 25 zusammen, der seinerseits wiederum am ersten Ringkolben 22 gelagert ist. Wird bei dieser Ausführungsform die vorbestimmbare Bedingung zum Umschalten zwischen erster Antriebseinheit und weiterer Antriebseinheit oder zum Zuschalten der zweiten Antriebseinheit 17 erreicht, so erfolgt zunächst durch Aufbringen eines Drucks im Zylinderraum 36 eine Bewegung des weiteren Ringkolbens 25 in Fig. 4 nach rechts. Dadurch werden die beiden Konen des weiteren Ringkolbens 25 und der Schraubhülse 24 miteinander verspannt, so dass es zu einem kraftschlüssigen Spannen des Rohres 15 kommt. Anschließend kann durch Druckaufbau im Zylinderraum 20 der zweiten Antriebseinheit 17 der Ringkolben 18 gemeinsam mit dem Rohr 15 bewegt werden.

Alternativ ist in Figur 3 als Trennmittel 23' eine hydraulische Spannhülse 26 vorgesehen. Hier wird Druck im Zylinderraum 37 aufgebracht, sobald die vorbestimmbare Bedingung erreicht ist, was zum kraftschlüssigen Verspannen zwischen Rohr 15 und Ringkolben 18 führt.

Gemäß Fig. 2 ist die Welle 13 über Tellerfedern 28 an der ersten Antriebseinheit 12 elastisch abgestützt. Ohne eine derartige elastische Abfederung bestünde die Gefahr, dass bei Betätigung der zweiten Antriebseinheit der Kraftfluss zwar vom Rohr über die Trennmittel 23,23',38 und den Ringkolben 18 an die feststehende Baueinheit erfolgt, sich jedoch eine Relativbewegung zwischen feststehender Baueinheit und Rohr einstellt, die die Wälz- oder Rollkörper 16 und die Welle 13 beansprucht. Um dies zu vermeiden und die Wälz- oder Rollkörper möglichst zu schonen, werden im Bereich der Lagerung 27 die Tellerfedern 28 vorgesehen. Die Tellerfedern 28 können aber auch bei der oben genannten überlagerten Bewegung als Dämpfungselemente wirken, da die erste Antriebseinheit 12 im Drehmoment begrenzt sein kann. Ohne Tellerfedern 28 kann alternativ die Antriebseinheit 12 ebenso eine Drehmomentbegrenzung aufweisen.

Um sicherzustellen, dass beim Verspannen des Rohres 15 mit dem Ringkolben 18 so wenig Kräfte wie möglich auf die Wälz- oder Rollkörper 16 und den Kopf 14 übertragen werden, ist die erste Antriebseinheit 12 über die Verbindungsmittel 29 so an der feststehenden Baueinheit 10 abgestützt, dass der das Außengewinde 14a tragende Kopf 14 der Welle 13 zwar in der Durchtrittsöffnung 10a der feststehenden Baueinheit 10 zu liegen kommt, jedoch in axialer Richtung des Rohrs von den Trennmitteln 23,23' axial beabstandet ist. Die Anordnung des Kopfes 14 innerhalb der Durchtrittsöffnung 10a der feststehenden Baueinheit ist vorteilhaft, da sich, wie ein Vergleich zwischen Fig. 2 und Fig. 3 ergibt, das Rohr 15 bei Betätigung der ersten Antriebseinheit so weit in Fig. 2 nach rechts bewegen kann, bis gemäß Fig. 3 der Anschlag 35a der Abdeckung 35 an der feststehenden Baueinheit zur Anlage kommt.

Der Aufbau der Vorrichtung zur Durchführung einer zweistufigen linearen Bewegung wurde bisher nur anhand eines Rohrs mit einer Welle und einer elektromechanischen Antriebseinheit erläutert. Grundsätzlich besteht die Möglichkeit, mehrere dieser Vorrichtungen parallel anzuordnen. Der Vorteil der Lösung mit nur einem Rohr und einer Antriebseinheit besteht darin, dass eine zentrale Klemmung möglich ist, ohne dass die Gefahr besteht, dass bei mehreren parallel zueinander erfolgenden Klemmungen eine Parallelität der einzelnen Vorrichtungen nicht mehr vorliegt. Bei Verwendung nur einer einfachen Klemmung treten Gleichlaufprobleme nicht mehr auf. Dennoch sind auch mehrere dieser Vorrichtungen nebeneinander einsetzbar.

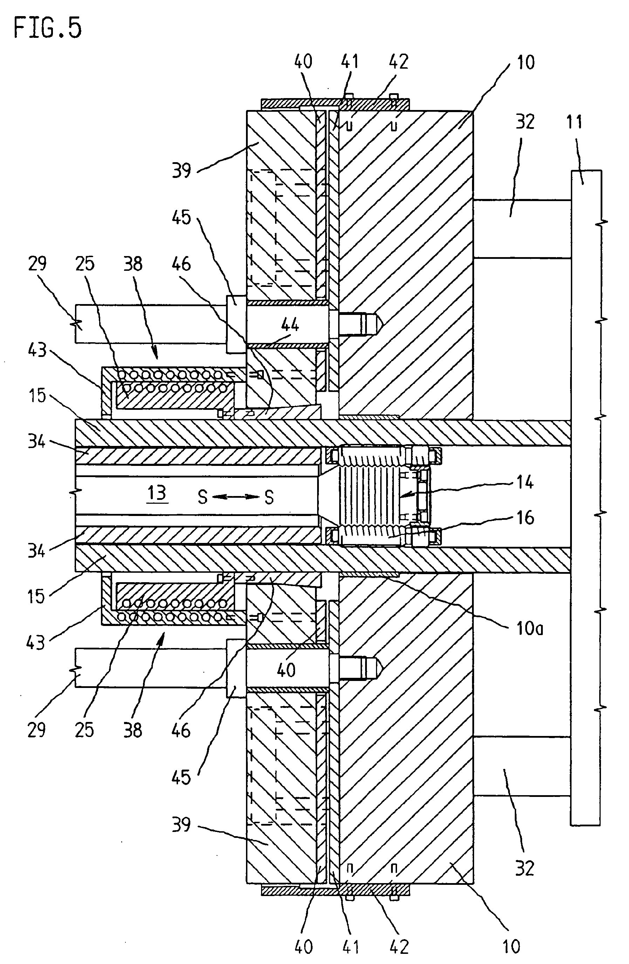

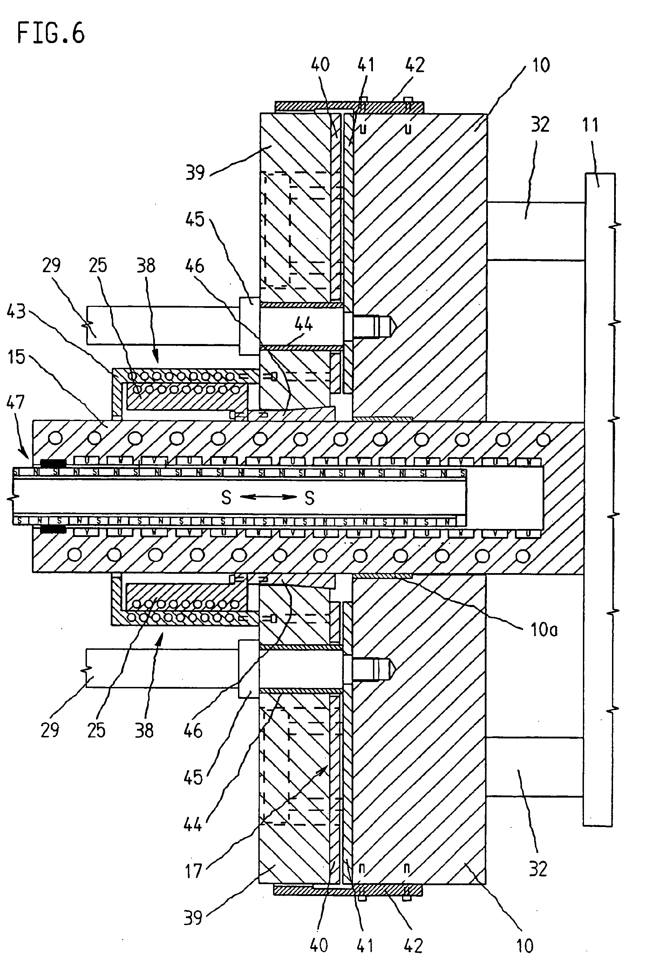

Die Figuren 5 und 6 zeigen weitere Ausführungsbeispiele, in denen die zweite Antriebseinheit 17 magnetisch betätigbar ist. Bei Betätigung nach Erreichen der Bedingung legen die Trennmittel 38 das Rohr 15 an einem Zwischenelement 39 fest, das an der feststehenden Baueinheit 10 angeordnet ist. Das als Stützplatte ausgebildete Zwischenelement 39 kann selbst magnetisch oder magnetisierbar sein oder gemäß Fig. 5 eine Magnetplatte 40 aufweisen. Ebenso ist die feststehende Baueinheit mit einer Magnetplatte 41 versehen. Damit kann das Zwischenelement 39 gemeinsam mit dem Rohr 15 wenigstens mittels von der zweiten Antriebseinheit 17 hervorgerufener magnetischer Anziehungskräfte zur Aufbringung der Schließkraft in Schließrichtung s-s bewegt werden. Die Bewegung erfolgt innerhalb einer Abdeckung 42.

Die Magnetplatten 40,41 entsprechen einander, so dass die zur Verfügung stehende Fläche in Verbindung mit dem Abstand der Magnetplatten zueinander bei Zuschaltung der zweiten Antriebseinheit 17 die zur Verfügung stehenden Magnetkräfte bestimmt. Vorzugsweise ist daher das Zwischenelement 39 in seinen Abmessungen in Horizontalprojektion in Schließrichtung s-s etwa so groß wie die feststehende Baueinheit 10. Mit einer derartigen Ausgestaltung ist ein magnetisches Aufbringen der Schließkraft durch die zweite Antriebseinheit 17 möglich. Da die Magnetkraft bei Verringerung des Abstands zwischen den Magnetplatten exponentiell ansteigt, kann damit leicht eine hohe Schließkraft erzeugt werden. Zum Öffnen und bedarfsweisen Aufreißen der Form muß nur die Polung geändert werden, so dass die erste Antriebseinheit nicht mit zusätzlichen Kräften belastet ist.

Gemäß Fig. 5 und 6 dienen die Verbindungsmittel 29 dem Zwischenelement 39 über Gleitlager 44 als Führung. Die Bewegung des Zwischenelements ist durch Anschläge 45 begrenzt. Die erste Antriebseinheit 12 kann gemäß Fig. 6 auch ein elektromagnetisch betriebener Linearmotor 47 sein, von dem ein Teil durch das Linearbewegungsmittel 15 gebildet ist, während der innenliegende Stator wie bei der elektromechanischen Antriebseinheit über die Verbindungselemente 29 an der feststehenden Baueinheit 10 abgestützt ist. Das wenigstens eine Trennmittel 38 verklemmt das Linearbewegungsmittel 15 kraftschlüssig z.B. hydraulisch. Die Trennmittel 38 können aber auch mittels eines Linearmotors betätigt werden.

Gemäß Fig. 5, 6 wirken die Trennmittel 38 wie eine Spannzange. In einem koaxial zum Rohr 34 angeordneten Gehäuse 43 kann z.B. ein Ringkolben 25 hydraulisch oder magnetisch in Schließrichtung s-s bewegt werden. Mit dem Ringkolben verbunden ist eine Ringhülse 46 mit Konus. Zur Bildung der Spannzange wirkt dieser Konus mit einem Gegenkonus am Zwischenelement 39 zusammen. Wird bei dieser Ausführungsform die vorbestimmbare Bedingung erreicht, erfolgt zunächst eine Bewegung des Ringkolbens 25 in Fig. 5,6 nach links. Dadurch werden die beiden Konen des Ringkolbens 25 und des Zwischenelements 39 miteinander verspannt, so dass es zu einem kraftschlüssigen Spannen des Rohrs 15 kommt. Anschließend kann durch die Magnetkräfte der zweiten Antriebseinheit 17 das Zwischenelement 39 gemeinsam mit dem Rohr 15 bewegt werden.

Die Vorrichtung arbeitet z.B. folgendermaßen. Zunächst wird das Antriebselement wenigstens einer ersten Antriebseinheit 12, die an der feststehenden Baueinheit 10 befestigt ist, bis zum Erreichen der vorbestimmbaren Bedingung betätigt. Dann wird das Antriebselement vom Kraftfluss bei Erreichen der vorbestimmbaren Bedingung mittels Trennmittel 23,23',38 getrennt, soweit dies erforderlich ist. Zumindest erfolgt die weitere Bewegung im Wesentlichen durch Betätigung wenigstens einer zweiten Antriebseinheit 17 im Wesentlichen nach Erreichen der vorbestimmbaren Bedingung zur Bewegung der bewegbaren Baueinheit 11. Hierzu steht wenigstens ein mit der bewegbaren Baueinheit 11 bewegtes Rohr 15 mit der Welle 13 in Wirkverbindung. Bei Betätigung der ersten Antriebseinheit 12 bewegt sich das Rohr 15 gegenüber der feststehenden Baueinheit 10. Genau gesagt gleitet es durch die feststehende Baueinheit 10. Das an der feststehenden Baueinheit 10 angeordnete Trennmittel 23,23',38 verklemmt bei Erreichen der Bedingung das Rohr 15 lösbar und vorzugsweise kraftschlüssig. Die Trennmittel 23,23' können durch Beaufschlagung der zugehörigen Zylinderräume 36,37 oder magnetisch aktiv zugeschaltet werden. Zur Erzielung einer überlagernden Bewegung können die erste Antriebseinheit 12 und die zweite Antriebseinheit 17 zumindest zeitweise gleichzeitig betätigt werden.

Liste der Bezugszeichen
- 10: feststehende Baueinheit
- 10a: Durchtrittsöffnung
- 11: bewegbare Baueinheit
- 12: erste Antriebseinheit
- 13: Welle
- 14: Kopf
- 14a: Außengewinde
- 15: Rohr
- 15a: Innengewinde
- 16: Wälz- oder Rollkörper
- 17: zweite Antriebseinheit
- 18: Ringkolben
- 18a: Flansch
- 19: Ausnehmung
- 19a: Grund
- 20,21: Zylinderraum
- 22: Ringflansch
- 23,23',38: Trennmittel
- 24: Schraubhülse
- 25: weiterer Ringkolben
- 26: hydraulische Spannhülse
- 27: Lagerung
- 28: Tellerfedern
- 29: Verbindungsmittel
- 30: stationärer Formträger
- 31: Form
- 32: Holme
- 33: Maschinenfuß
- 34: innen liegendes Rohr
- 35: Abschluss
- 35a: Anschlag
- 36,37: Zylinderraum
- 39: Zwischenelement
- 40,41: Magnetplatte
- 42: Abdeckung
- 43: Gehäuse
- 44: Gleitlager
- 45: Anschlag
- 46: Ringhülse
- 47: Linearmotor
- s-s: Schließrichtung

## Patentansprüche

1. Vorrichtung zur Durchführung einer im wesentlichen zweistufigen, linearen Bewegung mit
- einer feststehenden Baueinheit (10),
- einer bewegbaren Baueinheit (11),
- wenigstens einer ersten elektromechanischen Antriebseinheit (12), die an der feststehenden Baueinheit (10) befestigt ist,
- wenigstens einer von der ersten Antriebseinheit (12) drehbar angetriebenen Welle (13), die einen Bereich mit Außengewinde (14a) aufweist,
- wenigstens einem mit der bewegbaren Baueinheit (11) bewegten, zur jeweiligen Welle (13) koaxial angeordneten Rohr (15) mit Innengewinde (15a), das gegebenenfalls unter Zwischenschaltung von gegenüber der Welle axial unbeweglich gehaltenen Wälz- oder Rollkörpern (16) mit dem Außengewinde (14a) zur Bewegung der bewegbaren Baueinheit (11) in Wirkverbindung steht,
- Trennmitteln (23,23') zum bedarfsweisen Trennen der Welle (13) zumindest aus dem weiteren Kraftfluss bei Erreichen wenigstens einer vorbestimmbaren Bedingung in Form einer translatorischen Stellung des Rohrs (15) und/oder einer vorbestimmbaren Axialkraft,
- wenigstens einer zweiten Antriebseinheit (17), die im Wesentlichen nach Erreichen der vorbestimmbaren Bedingung betätigbar ist,
wobei das Rohr (15) die feststehende Baueinheit (10) durchdringt und sich bei Betätigung der ersten Antriebseinheit (12) gegenüber der feststehenden Baueinheit (10) bewegt, wobei das wenigstens eine radial auf das Rohr (15) wirkende Trennmittel (23,23',38) mit der zweiten Antriebseinheit (17) gemeinsam bewegbar ist und bei Erreichen der Bedingung zunächst das Rohr (15) an die zweite Antriebseinheit (17) lösbar koppelt und **dadurch** die Welle (13) zumindest aus dem weiteren, durch die zweite Antriebseinheit (17) hervorgerufenen Kraftfluss trennt, sobald die zweite Antriebseinheit alleine betätigt ist.

2. Vorrichtung nach Anspruch 1, **dadurch gekennzeichnet, dass** das Trennmittel (23,23',38) durch Beaufschlagung zugehöriger Zylinderräume (36,37) oder magnetisch aktiv betätigbar ist.

3. Vorrichtung nach Anspruch 1 oder 2, **dadurch gekennzeichnet, dass** die Trennmittel (23,23',38) das Rohr (15) bei Erreichen der Bedingung zentral kraftschlüssig verklemmen.

4. Vorrichtung nach einem der Ansprüche 1 bis 3 **dadurch gekennzeichnet, dass** die zweite hydraulische Antriebseinheit (17) als Kolben einen das Rohr (15) koaxial umschließenden Ringkolben (18) aufweist, dessen Zylinder durch eine Ausnehmung (19) der feststehenden Baueinheit (10) gebildet ist.

5. Vorrichtung nach einem der Ansprüche 1 bis 4, **dadurch gekennzeichnet, dass** zur Erzielung einer überlagernden Bewegung die erste Antriebseinheit (12) und die zweite Antriebseinheit (17) zumindest zeitweise gleichzeitig betätigbar sind.

6. Vorrichtung nach einem der Ansprüche 1 bis 5, **dadurch gekennzeichnet, dass** die Trennmittel (23,38) als hydraulisch oder magnetisch betätigbare Spannzange oder als hydraulische Spannhülse (26) ausgebildet sind.

7. Vorrichtung nach Anspruch 6, **dadurch gekennzeichnet, dass** an einem sich entlang des Rohres (15) erstreckenden Flansch (18a) eines Ringkolbens (18) der zweiten Antriebseinheit eine mit einem Konus versehene Schraubhülse (24) befestigt ist, die zur Bildung der Spannzange mit einem Konus eines im Ringkolben (18) gelagerten, weiteren Ringkolbens (25) zusammenwirkt.

8. Vorrichtung nach einem der Ansprüche 1 bis 7, **dadurch gekennzeichnet, dass** die Lagerung (27) der Welle (13) über Tellerfedern (28) an der ersten Antriebseinheit (12) elastisch abgestützt ist.

9. Vorrichtung nach einem der Ansprüche 1 bis 8, **dadurch gekennzeichnet, dass** die erste Antriebseinheit (12) über Verbindungsmittel (29) so vorzugsweise auf der von der beweglichen Baueinheit (11) abgewandten Seite an der feststehenden Baueinheit (10) abgestützt ist, dass der das Außengewinde (14a) tragende Kopf (14) der Welle (13) etwa in der Durchtrittsöffnung (10a) der feststehenden Baueinheit (10) zu liegen kommt.

10. Vorrichtung nach Anspruch 9, **dadurch gekennzeichnet, dass** die Trennmittel (23,23',38) in axialer Richtung des Rohrs (15) vom Kopf (14) beabstandet sind.

11. Vorrichtung nach einem der Ansprüche 1 bis 10, **dadurch gekennzeichnet, dass** die elektromechanische erste Antriebseinheit (12) mit Welle (13) durch einen Teil eines magnetisch betriebenen Linearmotors ersetzt ist, dessen anderes Teil durch das Rohr (15) gebildet ist.

12. Vorrichtung nach einem der Ansprüche 1 bis 3 oder 5 bis 11, **dadurch gekennzeichnet, dass** die Trennmittel (38) bei Betätigung nach Erreichen der Bedingung das Rohr (15) an einem Zwischenelement (39) festlegen, und dass das Zwischenelement (39) wenigstens mittels von der zweiten Antriebseinheit (17) hervorgerufener magnetischer Anziehungskräfte zur Aufbringung der Schließkraft in Schließrichtung (s-s) beweglich ist.

13. Verfahren zur Durchführung einer im wesentlichen zweistufigen, linearen Bewegung mit einer Vorrichtung nach einem der Ansprüche 1 bis 12, mit den Schritten:
- Betätigen der Welle (13) mittels wenigstens einer ersten elektromechanischen Antriebseinheit (12), die an der feststehenden Baueinheit (10) befestigt ist, bis zum Erreichen der vorbestimmbaren Bedingung,
- Trennen der Welle (13) zumindest aus dem weiteren Kraftfluss bei Erreichen der vorbestimmbaren Bedingung mittels Trennmittel (23,23',38),
- Betätigen wenigstens einer zweiten Antriebseinheit (17) im Wesentlichen nach Erreichen der vorbestimmbaren Bedingung zur Bewegung der bewegbaren Baueinheit (11) über wenigstens ein mit der bewegbaren Baueinheit (11) bewegtes, zur jeweiligen Welle (13) koaxial angeordnetes Rohr (15), das mit der Welle (13) in Wirkverbindung steht,
wobei das Rohr (15) sich bei Betätigung der ersten Antriebseinheit (12) gegenüber der feststehenden Baueinheit (10) bewegt und dass das wenigstens eine mit der zweiten Antriebseinheit (17) gemeinsam bewegbare, radial auf das Rohr (15) wirkende Trennmittel (23,23',38) im Wesentlichen bei Erreichen der Bedingung zunächst das Rohr (15) lösbar an die zweite Antriebseinheit zur gemeinsamen Bewegung koppelt und **dadurch** die Welle (13) zumindest aus dem weiteren, durch die zweite Antriebseinheit (17) hervorgerufenen Kraftfluss trennt, sobald die zweite Antriebseinheit alleine betätigt wird.

14. Verfahren nach Anspruch 13, **dadurch gekennzeichnet, dass** die Trennmittel (23,23',38) durch Beaufschlagung zugehöriger Zylinderräume (36,37) bzw. magnetisch aktiv zugeschaltet werden.

15. Verfahren nach Anspruch 13 oder 14, **dadurch gekennzeichnet, dass** die Trennmittel (23,23',38) das Rohr (15) bei Erreichen der Bedingung zentral kraftschlüssig verklemmen.

16. Verfahren nach einem der Ansprüche 13 bis 15, **dadurch gekennzeichnet, dass** zur Erzielung einer überlagernden Bewegung die erste Antriebseinheit (12) und die zweite Antriebseinheit (17) zumindest zeitweise gleichzeitig betätigt werden.

## Claims

1. Device for carrying out a substantially two-stage linear movement comprising
- a stationary structural unit (10),
- a displaceable structural unit (11),
- at least one first electromechanical drive unit (12), which is mounted on the stationary structural unit (10),
- at least one shaft (13,) which is rotatably driven by the first drive unit (12) and has a region with external thread (14a),
- at least one tube (15), with internal thread (15a), which tube is disposed coaxially relative to the respective shaft (13), is displaced with the displaceable structural unit (11) and is in operative connection with the external thread (14a) for the displacement of the displaceable structural unit (11), where applicable, by inserting cylinder or rolling bodies (16), which are retained so as to be non-displaceable in an axial manner opposite the shaft,
- separating means (23, 23') for the separation, where applicable, of the shaft (13) at least from the further flow of force when at least one predeterminable condition in the form of a translatory position of the tube (15) and/or of a predeterminable axial force is obtained,
- at least one second drive unit (17), which is substantially actuatable once the predeterminable condition has been achieved,
wherein the tube (15) extends through the stationary structural unit (10) and is displaced relative to the stationary structural unit (10) when the first drive unit (12) is actuated, at least the one separating means (23, 23', 38) which work radially on the tube (15) being jointly displaceable with the second drive unit (17) and, when the condition is achieved, the tube (15) is firstly coupled in a detachable manner to the second drive unit (17) and in so doing separates the shaft (13) at least from the further flow of force, which is produced by the second drive unit, as soon as the second drive unit is actuated alone.

2. Device according to claim 1, **characterized in that** the separating means (23, 23', 38) are actively actuatable through impingement of associated cylinder areas (36, 37) or in a magnetic manner.

3. Device according to claims 1 or 2, **characterized in that** the separating means (23, 23', 38) friction-lock the tube (15) in a central manner once the condition has been obtained.

4. Device according to one of the claims 1 to 3, **characterized in that** the second hydraulic drive unit (17) has as piston a rotary piston (18), which surrounds the tube (15) coaxially and the cylinder of which is formed through a recess (19) in the stationary structural unit (10).

5. Device according to one of claims 1 to 4, **characterized in that** to obtain a superposed displacement, the first drive unit (12) and the second drive unit (17) are actuatable simultaneously at least at times.

6. Device according to one of claims 1 to 5, **characterized in that** the separating means (23, 38) are configured as a hydraulically or magnetically actuatable tension clamp or as a hydraulic clamping sleeve.

7. Device according to claim 6, **characterized in that** a collet (24), which is provided with a cone and for the formation of the tension clamp interacts with a cone of another rotary piston (25), which is mounted in the rotary piston (18), is mounted on a flange (18a) of a rotary piston (18) of the second drive unit, which flange extends along the tube (15).

8. Device according to one of claims 1 to 7, **characterized in that** the mounting (27) of the shaft (13) is supported on the first drive unit (12) in a resilient manner via cup springs (28).

9. Device according to one of claims 1 to 8, **characterized in that** the first drive unit (12) is supported on the stationary structural unit (10) preferably on the side of the stationary structural unit (10) remote from the displaceable structural unit (11) via connecting means (29) in such a manner that the head (14) of the shaft (13), which bears the external thread (14a), comes to lie approximately in the opening (10a) of the stationary structural unit (10).

10. Device according to claim 9, **characterized in that** the separating means (23, 23', 38) are at a spacing from the head (14) in the axial direction of the tube (15).

11. Device according to one of claims 1 to 10, **characterized in that** the electromechanical first drive unit (12) with shaft (13) is replaced by a portion of a magnetically operated linear motor, the other portion of which is formed by the tube (15).

12. Device according to one of claims 1 to 3 or 5 to 11, **characterized in that** the separating means (38), when actuated once the condition has been obtained, secure the tube (15) to an intermediate member (39) and **in that** the intermediate member (39) is displaceable in the closing direction at least by means of magnetic attractive forces produced by the second drive unit (17) to provide the closing force in the closing direction (s-s).

13. Method for performing a substantially two-stage, linear movement using a device according to one of claims 1 to 12, having the steps of:
- actuating the shaft (13) by means of at least a first electromechanical drive unit (12), which is mounted on the stationary structural unit (10), until the predeterminable condition is obtained,
- separating the shaft (13) at least from the further flow of force, when the predeterminable condition is achieved, by means of separating means (23, 23', 38),
- actuating at least a second drive unit (17), substantially once the predeterminable condition has been achieved, for the displacement of the displaceable structural unit (11) via at least one tube (15), which is disposed coaxially relative to the respective shaft (13), which is displaced with the displaceable structural unit (11) and is in operative connection with the shaft (13),
wherein that the tube (15) is displaced relative to the stationary structural unit (10) when the first drive unit (12) is actuated and in that the at least one separating means (23, 23', 38), which works radially on the tube (15) and which is displaceable jointly with the second drive unit (17), substantially when the condition is achieved, initially couples the tube (15) in a detachable manner to the second drive unit for joint displacement and thereby separates the shaft (13) at least from the further flow of force produced by the second drive unit, as soon as the second drive unit is actuated alone.

14. Method according to claim 13, **characterized in that** the separating means (23, 23', 38) are actively connected through impingement of associated cylinder areas (36, 37) or respectively are actively connected in a magnetic manner.

15. Method according to claim 13 or 14, **characterized in that** the separating means (23, 23', 38) friction-lock the tube (15) in a central manner once the condition is achieved.

16. Method according to one of claims 18 to 20, **characterized in that**, to obtain a superposed displacement, the first drive unit (12) and the second drive unit (17) are actuated simultaneously at least at times.

## Revendications

1. Dispositif permettant de réaliser un mouvement linéaire pour l'essentiel en deux temps, comprenant
- une unité fixe (10),
- une unité mobile (11),
- au moins une première unité d'entraînement électromécanique (12), laquelle est montée à l'unité fixe (10),
- au moins un arbre (13) entraînable en rotation par la première unité d'entraînement (12), lequel comporte une zone avec filet extérieur (14a),
- au moins un tube (15) déplacé avec l'unité mobile (11) et disposé coaxialement par rapport à l'arbre (13) respectif, avec filet intérieur (15a), lequel est en liaison active avec le filet extérieur (14a) pour déplacer l'unité mobile (11), le cas échéant avec intercalation de corps de roulement (16) maintenus immobiles axialement par rapport à l'arbre,
- des moyens de séparation (23, 23') pour découpler l'arbre (13), selon les besoins, au moins de la suite du flux de force à l'obtention d'au moins une condition prédéterminable sous la forme d'une position de translation du tube (15) et/ou d'une force axiale prédéterminable,
- au moins une deuxième unité d'entraînement (17), laquelle est actionnable pour l'essentiel après l'obtention de la condition prédéterminable,
le tube (15) pénétrant dans l'unité fixe (10) et se déplaçant par rapport à l'unité fixe (10) lors de l'actionnement de la première unité d'entraînement (12), l'au moins un moyen de séparation (23, 23', 38) agissant radialement sur le tube (15) étant déplaçable conjointement avec la deuxième unité d'entraînement (17) et couplant tout d'abord le tube (15) de manière amovible à la deuxième unité d'entraînement (17), à l'obtention de la condition, et découplant ainsi l'arbre (13) au moins de la suite du flux de force provoqué par la deuxième unité d'entraînement (17) dès que la deuxième unité d'entraînement est actionnée seule.

2. Dispositif selon la revendication 1, **caractérisé en ce que** le moyen de séparation (23, 23', 38) est actionnable par alimentation d'espaces cylindriques (36, 37) y associés ou de manière magnétiquement active.

3. Dispositif selon la revendication 1 ou 2, **caractérisé en ce que**, à l'obtention de la condition, les moyens de séparation (23, 23', 38) coincent le tube (15) centralement par adhérence.

4. Dispositif selon l'une des revendications 1 à 3, **caractérisé en ce que** la deuxième unité d'entraînement hydraulique (17) comporte, en tant que piston, un piston annulaire (18) entourant le tube (15) coaxialement, dont le cylindre est constitué par un creux (19) de l'unité fixe (10).

5. Dispositif selon l'une des revendications 1 à 4, **caractérisé en ce que**, pour obtenir un mouvement de superposition, la première unité d'entraînement (12) et la deuxième unité d'entraînement (17) sont actionnables simultanément au moins temporairement.

6. Dispositif selon l'une des revendications 1 à 5, **caractérisé en ce que** les moyens de séparation (23, 38) sont réalisés en tant que pince de serrage actionnable hydrauliquement ou magnétiquement ou en tant que manchon de serrage hydraulique (26).

7. Dispositif selon la revendication 6, **caractérisé en ce qu'**est fixé, sur un flasque (18a) d'un piston annulaire (18) de la deuxième unité d'entraînement qui s'étend le long du tube (15), un manchon fileté (24) pourvu d'un cône, lequel manchon coopère avec un cône d'un autre piston annulaire (25) logé dans le piston annulaire (18) pour former la pince de serrage.

8. Dispositif selon l'une des revendications 1 à 7, **caractérisé en ce que** le palier (27) de l'arbre (13) s'appuie élastiquement sur la première unité d'entraînement (12) par l'intermédiaire de rondelles Belleville (28).

9. Dispositif selon l'une des revendications 1 à 8, **caractérisé en ce que** la première unité d'entraînement (12) s'appuie, par l'intermédiaire de moyens de liaison (29), préférentiellement sur le côté opposé à l'unité mobile (11), de manière telle sur l'unité fixe (10) que la tête (14) de l'arbre (13) portant le filet extérieur (14a) vient se mettre à peu près dans l'orifice de passage (10a) de l'unité fixe (10).

10. Dispositif selon la revendication 9, **caractérisé en ce que** les moyens de séparation (23, 23', 38) sont espacés de la tête (14) dans le sens axial du tube (15).

11. Dispositif selon l'une des revendications 1 à 10, **caractérisé en ce que** le premier moyen d'entraînement électromécanique (12) avec arbre (13) est remplacé par une partie d'un moteur linéaire à fonctionnement magnétique dont l'autre partie est constituée par le tube (15).

12. Dispositif selon l'une des revendications 1 à 3 ou 5 à 11, **caractérisé en ce que** les moyens de séparation (38), lors de l'actionnement après obtention de la condition, fixent le tube (15) sur un élément intermédiaire (39) et **en ce que** l'élément intermédiaire (39) est mobile au moins au moyen de forces d'attraction magnétiques provoquées par la deuxième unité d'entraînement (17) pour appliquer la force de fermeture dans le sens de la fermeture (s-s).

13. Procédé permettant de réaliser un mouvement linéaire pour l'essentiel en deux temps avec un dispositif selon l'une des revendications 1 à 12, comprenant les étapes suivantes:
- actionnement, jusqu'à obtention de la condition prédéterminable, de l'arbre (13) au moyen d'au moins une première unité d'entraînement électromécanique (12) qui est fixée à l'unité fixe (10);
- découplage de l'arbre (13) au moins de la suite du flux de force à l'obtention de la condition prédéterminable au moyen de moyens de séparation (23, 23', 38);
- actionnement d'au moins une deuxième unité d'entraînement (17) pour l'essentiel après l'obtention de la condition prédéterminable pour le mouvement de l'unité mobile (11) par l'intermédiaire d'au moins un tube (15) déplacé avec l'unité mobile (11) et disposé coaxialement par rapport à l'arbre (13) respectif, lequel est en liaison active avec l'arbre (13),
le tube (15) se déplaçant par rapport à l'unité fixe (10) lors de l'actionnement de la première unité d'entraînement (12) et l'au moins un moyen de séparation (23, 23', 38), agissant radialement sur le tube (15) et étant déplaçable conjointement avec la deuxième unité d'entraînement (17), couplant tout d'abord, pour l'essentiel à l'obtention de la condition, le tube (15) de manière amovible à la deuxième unité d'entraînement aux fins du mouvement conjoint et découplant ainsi l'arbre (13) au moins de la suite du flux de force provoqué par la deuxième unité d'entraînement (17) dès que la deuxième unité d'entraînement est actionnée seule.

14. Procédé selon la revendication 13, **caractérisé en ce que** les moyens de séparation (23, 23', 38) sont enclenchés par alimentation d'espaces cylindriques (36, 37) y associés ou de manière magnétiquement active.

15. Procédé selon la revendication 13 ou 14, **caractérisé en ce que**, à l'obtention de la condition, les moyens de séparation (23, 23', 38) coincent le tube (15) centralement par adhérence.

16. Procédé selon la revendication 13 à 15, **caractérisé en ce que**, pour obtenir un mouvement de superposition, la première unité d'entraînement (12) et la deuxième unité d'entraînement (17) sont actionnées simultanément au moins temporairement.
